**Europäisches Patentamt**

**European Patent Office**

**Office européen des brevets**

(11) Publication number : **0 501 709 A1**

(12) **EUROPEAN PATENT APPLICATION**

(21) Application number : **92301502.8**

(22) Date of filing : **24.02.92**

(51) Int. Cl.⁵ : **H01M 2/12**

(30) Priority : **28.02.91 GB 9104203**

(43) Date of publication of application :
**02.09.92 Bulletin 92/36**

(84) Designated Contracting States :
**DE ES FR GB IT**

(71) Applicant : **LUCAS-YUASA BATTERIES LIMITED**
**Formans Road**
**Sparkhill, Birmingham (GB)**

(72) Inventor : **Bant, John Alaric**
**45 Littlemead Road**
**Majors Green, Solihull (GB)**
Inventor : **Peters, David John**
**5 Grayling Road**
**Stourbridge (GB)**

(74) Representative : **Carpenter, David et al**
**MARKS & CLERK Alpha Tower Suffolk Street**
**Queensway**
**Birmingham B1 1TT (GB)**

(54) **Battery cover with venting system.**

(57)   A lid assembly for an electric storage battery wherein a lid moulding (11) is formed with a plurality of integral filling tubes (12) which, in use, extend downwardly into respective cell compartments of the battery, a respective plug (16) engaged in each filling tubes and closing the outer end of its respective filling tube, each plug and its respective tube defining a gallery (28) which communicates with the interior of the respective cell compartment through a porous flame arrestor (22) and, a venting passage (13) open at an end wall of the battery lid assembly and communicating with a plurality of said galleries (28).

FIG. 1

EP 0 501 709 A1

FIG 3

This invention relates to a lid assembly for an electric storage battery.

The invention is particularly concerned with batteries for road vehicles, of the kind which are usually referred to as "Starting, Lighting, Ignition" (S.L.I.) batteries. Such batteries are rechargeable, lead-acid, batteries usually employing six adjacent cells electrically connected in series. Hydrogen and oxygen gases are evolved from the electrolyte of the cells during charging of the battery and to minimise the risk of explosive combustion of this gas mixture within the casing of the battery various gas venting arrangements have been proposed. European Patent Application No 305822 illustrates a known venting arrangement wherein a vent passage within the lid of the battery, which communicates with a plurality of the cells of the battery, is vented to atmosphere through a porous flame arrestor, the flame arrestor in effect providing protection for the plurality of cells with which the vent passage communicates. The arrangement illustrated in European Patent Application 305822 provides venting of the gases at an end wall of the battery casing as is desirable in many applications. For example, such end venting easily accommodates the addition of an external venting pipe whereby gases vented through the flame arrestor are conducted from the battery compartment of the vehicle and are discharged to atmosphere at the exterior of the battery compartment.

It is found however that arrangements of the kind illustrated in European Patent Application 305822, where the vent passage communicates with a plurality of cells and is equipped with a single flame arrestor, do not perform satisfactorily in adverse operating conditions, for example when the battery is subjected to severe vibration, or to overcharge voltages, or both. In such situations it is found that electrolyte can collect in the vent tube, and the passage of gases along the vent tube can sweep the electrolyte through the porous flame arrestor. Clearly such expulsion of electrolyte is extremely undesirable, and the partial, or total blockage of the porous flame arrestor by electrolyte in the pores thereof may well give rise to an undesirable increase in pressure within the battery casing itself.

It has also previously been proposed to vent each cell of an S.L.I. battery to atmosphere through an individual porous flame arrestor. The portion of the lid of the battery overlying each cell compartment of the battery is formed with an aperture through which electrolyte is introduced into the compartments during filling of the battery. The filling apertures in the lid are closed in use by respective plugs and it has been proposed to incorporate a porous flame arrestor in each plug respectively, and to allow the gases from each cell of the battery to vent to atmosphere through the respective plug. Such an arrangement is disadvantageous in that each cell vents individually to atmosphere at the upper surface of the battery, and it is difficult, and therefore expensive, to provide an arrangement associated with the whole of the top surface of the battery whereby gases venting at the top surface of the battery can be conducted to the exterior of the battery compartment.

German Patent Application 3444011A discloses a battery construction in which each cell compartment vents, by way of its filling tube, into a common vent passage in the lid of the battery. However no provisions is made in the battery of DE 3444011A for preventing combustion of battery gases in the cell compartments as a result of ignition of the gases at the outlet of the vent passage.

It is an object of the present invention to provide a battery lid assembly having a venting arrangement wherein the aforementioned disadvantages are minimised.

In accordance with the present invention there is provided a lid assembly for an electric storage battery comprising, a lid moulding formed with a plurality of integral filling tubes which, in use, extend downwardly into respective cell compartments of the battery, a respective plug in use engaged in each filling tube so as to close the outer end thereof, each plug and its respective tube defining a gallery connected to venting passage means in the lid moulding, each plug having connecting passage means whereby each compartment communicates with its respective gallery by way of the respective plug, the assembly including seal means ensuring that each gallery communicates with the respective cell compartment only through the respective connecting passage means, and, a porous flame arrestor in said connecting passage means through which gas must flow to reach the respective gallery.

Preferably said connecting passage means includes a combustion chamber at the outer face of said flame arrestor.

Preferably the lid assembly includes a respective baffle arrangement extending the gas flow path to the inner face of each flame arrestor.

Desirably the filling tubes are arranged in a row lengthwise of the battery, and the galleries of all of the tubes of the row communicate with said vent passage in the lid assembly.

Desirably each plug sealingly engages its respective filling tube at a first location adjacent the outer end of the tube, and at a second location, spaced from the first location so as to define said gallery between said first and second sealing locations.

Preferably each plug is hollow, being open at its inner end and closed at its outer end, the respective porous flame arrestor being received within the hollow plug, and, the interior of the plug, at the face of the arrestor remote from the inner end of the plug, being in communication with the gallery by way of one or more transverse passages in the wall of the plug.

Desirably each baffle means is in the form of a moulded element received within the respective hollow plug between the inwardly presented face of the respective porous flame arrestor and the inner, open end of the plug.

One example of the invention is illustrated in the accompanying drawings wherein:-

Figure 1 is a plan view of an inverted battery lid moulding,

Figure 2 is a sectional view on the line 2-2 in Figure 1,

Figure 3 is an enlarged, cross-sectional view of part of the lid moulding with a plug engaged therein,

Figure 4 is a side elevational view of the plug illustrated in Figure 3,

Figure 5 is a sectional view of the plug illustrated in Figure 4,

Figure 6 is a sectional view of part of a modified lid moulding, to an enlarged scale,

Figures 7, 8, and 9 are respectively views similar to Figure 3 of modifications, and

Figure 10 is a side elevation view of a baffle member for use within the plug illustrated in Figures 3, 4, and 5 and shown already in place in the plugs illustrated in Figures 7, 8 and 9.

Referring to the drawings, the battery casing, of which the lid assembly forms part, is basically of a known construction comprising a one-piece polypropylene lid moulding 11 and a battery box (not shown) also moulded in polypropylene. The lid and box mouldings are, in use, welded together by a known heat-sealing technique to define a casing divided internally into a plurality (usually six) of parallel cell compartments.

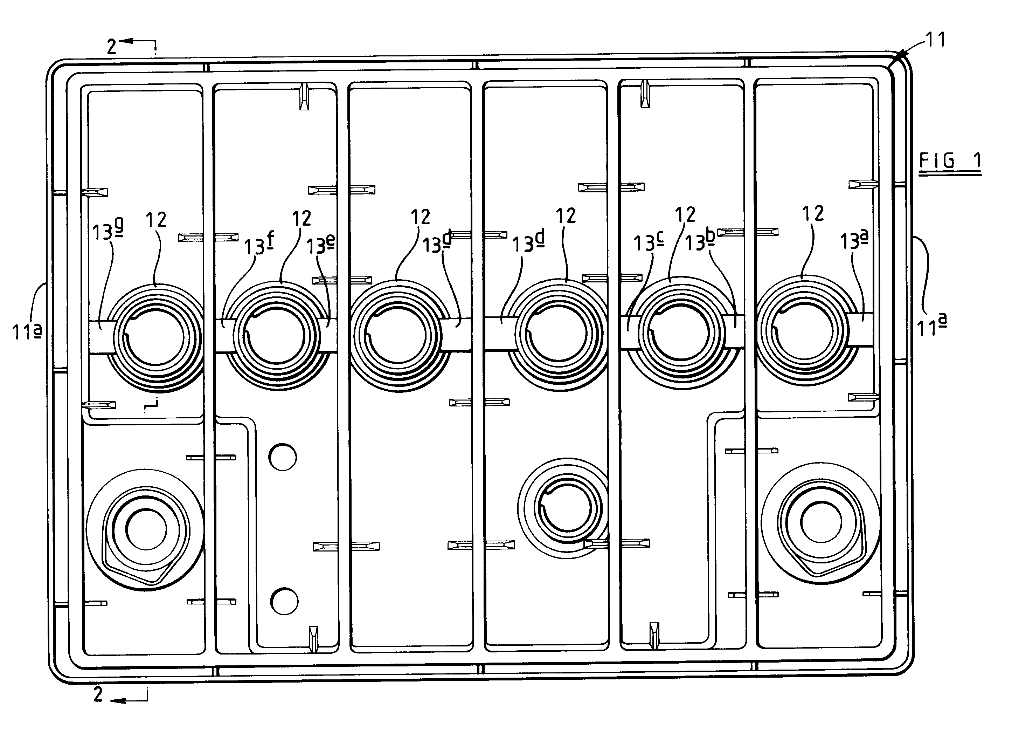

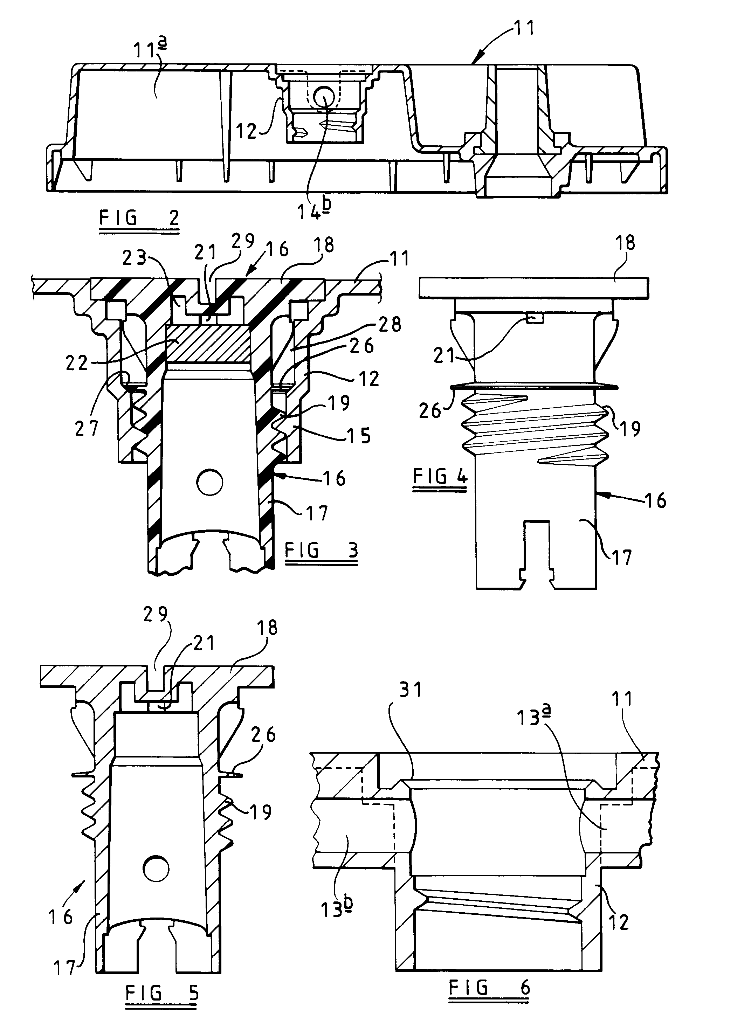

The lid moulding 11 has external top, side, and end faces, the side faces extending transverse to the compartments of the battery case in use, and the end faces 11a extending parallel to the compartments. Above each compartment the lid moulding 11 includes a filling tube 12 whereby electrolyte can be introduced into the cells of the battery individually from the top surface of the battery. As is clear from Figure 2 each tube 12 is an integral part of the lid moulding 11 and extends downwardly from the upper surface of the lid towards the cell compartment defined beneath the lid. The lid illustrated in Figures 1 and 2 is intended for use with a six cell battery and the six filling tubes 12 are aligned in a rectilinear row parallel to the length of the battery.

Within the lid moulding is defined a vent passage 13 having a first portion 13a open at one end at one end face 11a of the lid moulding and communicating at its opposite end with the interior of the first tube 12 of the row of tubes by way of an aperture in the wall of the tube. A second portion 13b of the vent passage 13 interconnects the interior of the first tube 12 with the interior of the second tube 12, and a third portion 13c interconnects the interior of the second and third tubes 12 of the row. Similarly fourth, fifth and sixth portions 13d, 13e and 13f interconnect the third, fourth, fifth, and sixth tubes 12 and a seventh portion 13g extends from the sixth tube to the opposite end wall 11a of the lid moulding. In use the end of the portion 13g can be open to permit venting but usually will be plugged to restrict venting to one end of the moulding. If desired the passage 13 could be in two separate parts each venting three tubes 12 to a respective end of the moulding, there being no connection between the third and fourth tubes, but the single passage arrangement is preferred.

Each filling tube 12 is stepped to produce successive regions of smaller diameter, the region of smallest diameter being at the free, innermost end of the tube. Internally the wall of the region 15 of smallest diameter is formed with a screw thread for coaction with an external screw thread on a moulded synthetic resin plug engagable within the tube 12 to close the tube.

A respective moulded synthetic resin plug 16 is provided for each of the tubes 12, the plugs 16 being identical. Each plug 16 includes a hollow sleeve 17 open at one end, and closed at the opposite end by an integral disc 18 concentric with, and of larger diameter than, the sleeve 17. The screw thread 19 of the plug which cooperates with the screw thread on the interior of the tube portion 15 is formed on the exterior of the sleeve 17 and adjacent the undersurface of the disc 18 the wall of the sleeve 17 is pierced to form one or more passages 21 establishing communication between the interior and exterior of the sleeve 17 immediately beneath the disc 18.

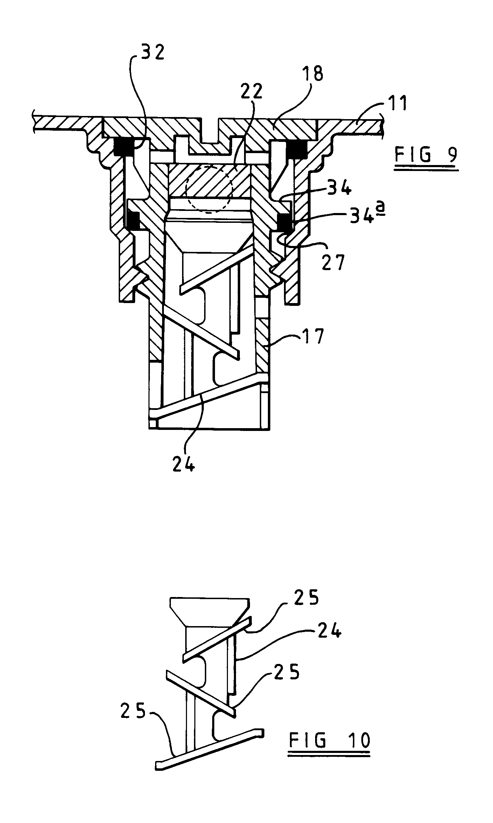

Housed within the sleeve 17 of each plug is a porous synthetic resin, or ceramic disc 22 defining a flame arrestor. The flame arrestor 22 is spaced below the disc 18 to define a combustion chamber 23 communicating with the exterior of the sleeve through the passage or passages 21. A moulded synthetic resin baffle member 24 (Figure 10) is received within the sleeve 17 between the disc 22 and the open end of the sleeve and defines therewith a convoluted flow path along which gases from the respective cell compartment must flow to reach the porous flame arrestor 22. As is apparent from the drawings the baffle member 24 defines a number of inclined surfaces 25 on which electrolyte droplets carried by the gas flow can settle, and coalesce to form liquid drops which flow along the inclined surfaces 25 and ultimately drip back into the cell compartment. It will be recognised also that the member 24 will prevent electrolyte being splashed directly onto the porous flame arrestor even in conditions of violent vibration. Preferably the baffle member 24 is a snap fit within the sleeve 17, but alternatively it can be secured within the sleeve 17 by an adhesive, or by welding.

Disposed between the screw thread 19 and the undersurface of the disc 18, and formed integrally with the sleeve 17 is an outwardly projecting circumferentially extending flexible flange 26. When the plug 16 is screwed tightly into its respective tube 12 the periphery of the disc 18 sealingly engages a circumferential shoulder at the commencement of the tube 12 and simultaneously the flange 26 bears against, and sealingly engages, a frusto-concial surface 27 of the inner surface of the tube 12. The external diameter of the sleeve 17 between the disc 18 and the flange 26 is less than the internal diameter of the corresponding portion of the tube 12 and thus an annular gallery 28 encircling the plug 16 is defined between the inner surface of the tube 12 and the outer surface of the sleeve 17 of the plug. The, or each, vent passage portion 13 associated with the respective tube opens into the respective gallery 28 and thus a gas vent path is defined from each cell compartment to the or each end face of the lid moulding by way of each plug. More specifically, the gas vent path from each cell compartment comprises the convoluted gas flow path defined within each plug sleeve 17 by the respective baffle member 24, the respective porous flame arrestor 22, the respective combustion chamber 23, the or each passage 21, the gallery 28, and the vent passage 13. The vent path for the third compartment of course includes the galleries associated with the third, second and first tubes 12, similar considerations applying to the vent paths of the other cell compartments.

It will be noted that the outer face of the disc 18 of each plug 16 is formed with a diametrically disposed groove 29 to receive a tool whereby the plug may be screwed, and unscrewed in relation to the lid moulding 11.

In the modification illustrated in Figure 6 the lid moulding 11, at the root of each tube 11 is shaped to define an annular seat 31 of inverted V-shape cross-section with which the disc 18 of the respective plug 16 coacts to provide the seal at the axially upper end of the respective annular gallery 28. Figure 8 illustrates a plug cooperating with such a seat 31 through the intermediary of an annular rubber (or similar resilient material) sealing washer 32. Figure 8 also illustrates a further modification in which the flange 26 is thickened to form a more substantial flange 26a cooperating with the frusto-concial surface 27 of the inner surface of the tube 12 to seal the axially lowermost end of the annular gallery 28.

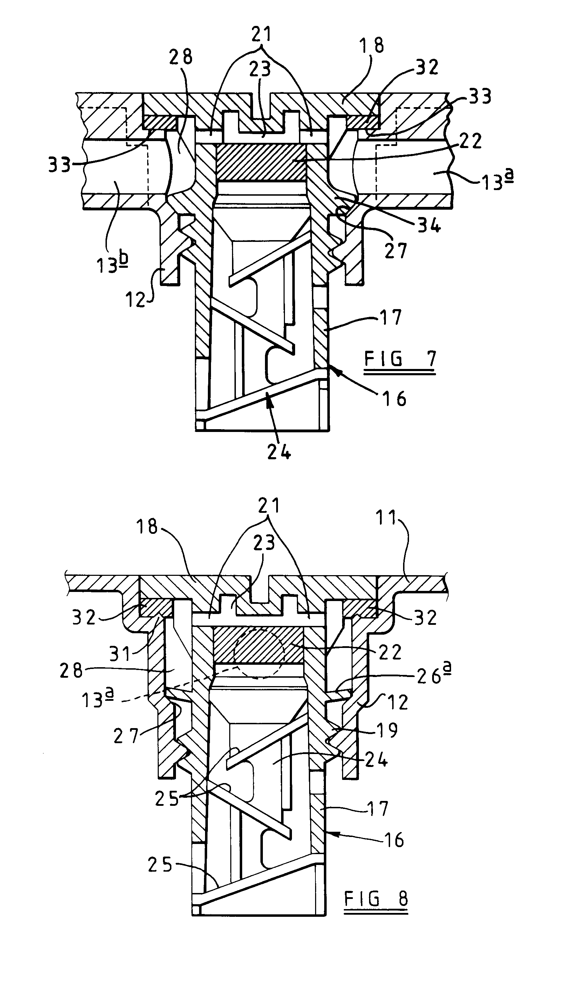

The seat 31 of Figures 6 and 8 is of inverted V-shape cross-section, but in the modification illustrated in Figure 7 the seat 31 is replaced by a plain, annular seating surface 33 against which the rubber sealing washer 32 is trapped by the disc 18 of the plug. Moreover, the flange 26 is replaced by a frusto-concial formation 34 defined by a circumferential rib integral with the sleeve 17 of the plug which coacts with the frusto-concial surface 27 on the interior of the tube 12 to provide the seal at the axially lowermost end of the gallery 28.

In Figure 9 the flange formation 34 is modified to receive a resilient, conveniently rubber, annular sealing ring 34a which coacts with the frusto-conical surface 27 of the tube interior to provide the lower seal of the gallery 28.

It will be recognised that in all of the variants described above the only venting path for gases is through a respective plug 18. Thus although gas may percolate through the screw thread connecting the sleeve 17 and the respective tube 11 there is a seal between the sleeve 17 and the tube 11 immediately above the screw thread and gases cannot pass this seal. Thus any gases evolved within a cell compartment must pass through the convoluted vent path defined by the baffle member 24 of the respective plug and any electrolyte droplets carried with the gas flow will be trapped by the baffle member and ultimately returned to the electrolyte within the cell by dripping from the baffle member and the open end of the respective sleeve 17.

Each vent path includes an individual flame arrestor 22 since there is a flame arrestor 22 within each plug. Moreover, within each plug there is a combustion chamber 23 so that in the event of combustion of gases at the end of the vent passage 13, and the unlikely event of the flame propagating back along the vent passage 13 then combustion will be extinguished in the combustion chambers since the burn-rate within a chamber 23 will exceed the rate at which combustible gases can flow into the chamber through the respective porous flame arrestor 22. It will not therefore be possible for flame to be maintained within the combustion chamber 23 thereby avoiding the risk of damage to the porous flame arrestor 22 by continued combustion at its surface. During normal venting however all gases venting from the cell compartments are directed by the vent passage to the end wall of the lid assembly where they can vent to atmosphere, or, if desired can vent along external pipe work to a location remote from the battery compartment of the vehicle utilising the battery.

## Claims

1. A lid assembly for an electric storage battery comprising, a lid moulding (11) formed with a plurality of integral filling tubes (12) which, in use, extend downwardly into respective cell compartments of the battery, a respective plug (16) in use engaged in each filling tube (12) so as to close the outer end thereof, each plug (16) and its respective tube (12) defining a gallery (28) connected to venting passage means (13) in the lid moulding, each plug (16) having connecting passage means (21) whereby each compartment communicates with its respective gallery (28) by way of the respective plug (16), the assembly being characterized by seal means (26, 27) ensuring that each gallery (28) communicates with the respective cell compartment only through the respective connecting passage means (21), and, a porous flame arrestor (22) in said connecting passage means through which gas must flow to reach the respective gallery.

2. An assembly as claimed in Claim 1 characterized in that said connecting passage means includes a combustion chamber (23) at the outer face of said flame arrestor (22).

3. An assembly as claimed in Claim 1 or Claim 2 characterised by a respective baffle arrangement (24, 25) extending the gas flow path to the inner face of each flame arrestor (22).

4. An assembly as claimed in any one of Claims 1 to 3 characterized in that said filling tubes (12) are arranged in a row lengthwise of the battery, and the galleries (28) of all of the tubes of the row communicate with a vent passage (13) in the lid assembly.

5. An assembly as claimed in any one of Claims 1 to 4 characterized in that each plug (16) sealingly engages its respective filling tube (12) at a first location adjacent the outer end of the tube, and at a second location (27), spaced from the first location so as to define said gallery (28) between said first and second sealing locations.

6. An assembly as claimed in any one of Claims 1 to 5 characterized in that each plug is hollow, being open at its inner end and closed at its outer end, the respective porous flame arrestor (22) being received within the hollow plug, and, the interior of the plug, at the face of the arrestor remote from the inner end of the plug, being in communication with the gallery (28) by way of one or more transverse passages (21) in the wall of the plug.

7. An assembly as claimed in Claim 6 characterized in that each baffle arrangement (24, 25) is in the form of a moulded element (24) received within the respective hollow plug (16) between the inwardly presented face of the respective porous flame arrestor and the inner, open end of the plug.

FIG. 1

FIG 2

FIG 3

FIG 4

FIG 5

FIG 6

FIG 7

FIG 8

FIG 9

FIG 10

**European Patent Office**

# EUROPEAN SEARCH REPORT

Application Number

EP    92 30 1502

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 509 911 (SOCIEDAD ESPANOLA DEL ACUMULADOR TUDOR, SA)<br>* claims 4,5,7; figure 1 *<br>--- | 1 | H01M2/12 |
| A | PATENT ABSTRACTS OF JAPAN<br>vol. 12, no. 101 (E-595)(2948) 2 April 1988<br>& JP-A-62 232 853 ( MATSUSHITA ELECTRIC IND CO LTD ) 13 October 1987<br>* abstract *<br>--- | 3,7 | |
| D,A | DE-A-3 444 011 (MOLL PETER)<br>* page 3, last paragraph - page 4, paragraph 1; figures 1-3 *<br>--- | 1 | |
| A | US-A-2 221 542 (M. A. HOPKINS)<br>* claim 6; figures 1-3 *<br>----- | 1 | TECHNICAL FIELDS SEARCHED (Int. Cl.5)<br><br>H01M |

The present search report has been drawn up for all claims

| Place of search | Date of completion of the search | Examiner |
|---|---|---|
| THE HAGUE | 05 JUNE 1992 | D'HONDT J.W. |